(19) Europäisches Patentamt
European Patent Office
Office européen des brevets

(11) **EP 3 742 310 A1**

(12) **EUROPEAN PATENT APPLICATION**
published in accordance with Art. 153(4) EPC

(43) Date of publication:
**25.11.2020 Bulletin 2020/48**

(51) Int Cl.:
***G06F 17/00*** (2019.01)

(21) Application number: **19904385.2**

(22) Date of filing: **24.12.2019**

(86) International application number:
**PCT/CN2019/127942**

(87) International publication number:
**WO 2020/135425 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2018 CN 201811593741**

(71) Applicant: **Central South University**
**Changsha, Hunan 410083 (CN)**

(72) Inventors:
• **XU, Ping**
**Changsha, Hunan 410083 (CN)**
• **LU, Sisi**
**Changsha, Hunan 410083 (CN)**
• **YAN, Kaibo**
**Changsha, Hunan 410083 (CN)**
• **YAO, Shuguang**
**Changsha, Hunan 410083 (CN)**
• **HUANG, Qi**
**Changsha, Hunan 410083 (CN)**

(74) Representative: **White, Andrew John et al**
**Mathys & Squire LLP**
**The Shard**
**32 London Bridge Street**
**London SE1 9SG (GB)**

(54) **HEAD VEHICLE MINIATURE CONSTRUCTION METHOD BASED ON FORCE AND RIGIDITY EQUIVALENCE AND HEAD VEHICLE MINIATURE**

(57)    Disclosed by the present invention are a train head vehicle miniature construction method based on force and rigidity equivalence and a head vehicle miniature, the method comprising the following steps: S1: acquiring similarity factors of various dynamics parameters of a head vehicle miniature with respect to a full-size train; S2: dividing a full-size train head vehicle into a deformation energy absorption zone and a non-deformation zone according to a deformation energy absorption feature; S3: constructing a deformation energy absorption zone and a non-deformation zone of the head vehicle miniature according to the similarity factors, obtaining a deformation energy absorption feature curve of the train head vehicle miniature by means of conversion according to a deformation energy absorption feature curve of the full-size train head vehicle, then designing the sizes of a bumper, a crushable tube, a main energy absorption device and a cabin in the deforming energy absorption zone of the head vehicle miniature on the basis of the deformation energy absorption feature curve of the head vehicle miniature and a size similarity factor; and designing the non-deformation zone of the head vehicle miniature according to the size similarity factor and a rigidity simi-

larity factor. The constructed head vehicle miniature described by the present invention may guarantee the similarity between the impact force of a train and the rigidity of a vehicle body so as to precisely restore the process of a collision of a train and have higher reliability.

**FIG. 1**

**Description**

TECHNICAL FIELD

The invention relates to the technical field of vehicles, and in particular relates to a method for constructing a scaled model of a head-car based on force equivalence and stiffness equivalence and a scaled model of the head-car.

BACKGROUND

With the continuous increasing of running speed of train, the requirements for the running safety of the train become higher and higher. Researches on Train Passive Safety Protection mainly include three methods: numerical simulation, actual car test and scaled model test. Numerical simulation cannot solve the indeterminacy caused by the change of input parameters, and cannot accurately describe various complex constraints in the actual structure of the train. The actual car test is timing consuming and costly, and is difficult to achieve. An equivalent scaled model of the train adopts a small-scale model of the train to research the dynamic response of a full-scale train during collision, which is an efficient and economical research method.

Aiming at the existing equivalent scaled model of the train, Shuguang Yao et al proposed an invention patent of "a collision test device and related method for an equivalent scaled model of a train". This device includes a control system, a force-measuring wall, and an equivalent scaled model of a train, a driving car, and a launching system of the driving car. The data related to the collision can be obtained by a moving equivalent scaled model impacting the force-measuring wall or a static equivalent scaled model. However, this invention is intended to design a collision test device for an equivalent scaled model of a train, rather than to propose a specific method for constructing a scaled model of a train. In addition, Guangjun Gao et al proposed an invention patent of "a method and related system for constructing an equivalent scaled model of a train for a collision experiment". According to this invention, a scale factor of the ratio of the train mass to the impact force and a scale factor of the ratio of the train speed to the time is obtained by integrating the dynamic equation without considering the existence of damping, based on the principle that the acceleration of impact of the scaled model is consistent with that of the actual car. The scale rules are established according to the scale factor of the ratio of the train mass to the impact force and the scale factor of the ratio of the speed to the time. The parameters of the scaled model are determined according to the scale rules to construct the scaled model, wherein the scaled car body is made of a solid iron piece, and the scaled energy absorption structure is made of aluminum honeycomb or aluminum foam. However, the train is simplified into a single mass point without considering the actual structure of the train. The scaled car body is made of a high strength material that is not easily deformed, such as a solid iron piece, which causes a change of the centre of gravity of the train. Therefore, there is a great difference between the internal structure of the scaled train and the internal structure of the actual train, so that the similarity between the stiffness of the car bodies of the scaled model and the stiffness of the actual train cannot be guaranteed, which result in a great influence on the dynamic response of the train collision. Therefore, this solution is difficult to accurately simulate the dynamic response of the train collision, and the process of the train collision cannot be truly restored.

SUMMARY

The purpose of the present invention is to provide a method for constructing a scaled model of a head-car based on force equivalence and stiffness equivalence and a scaled model of a head-car. According to the method, the head-car of the train is divided into a deformation energy absorption zone and a non-deformation zone. Equivalent scale in impact force is adopted for the energy absorption characteristic of the deformation energy absorption zone, and equivalent scale in stiffness is adopted for the bearing characteristic of the non-deformation zone. The constructed equivalent scaled model of the head-car of the train satisfies both the similarity relationship of dynamic characteristics and the similarity in structure, and can ensure the similarity in the impact force and the similarity in the stiffness of the car body, accurately restore the collision process of the train, and obtain a scaled model of the head-car of the train with a higher reliability.

A method for constructing a scaled model of a head-car of a train based on force equivalence and stiffness equivalence, including the following steps:

> S1: similarity factors of dynamic parameters of the scaled model of the head-car relative to a full-scale train are acquired;
> wherein the similarity factors of the dynamic parameters include at least a force similarity factor, a displacement similarity factor, a dimension similarity factor, and a stiffness similarity factor;

> S2: the head-car of the train being is divided into a deformation energy absorption zone and a non-deformation zone according to the deformation energy absorption characteristic of the train during collision;
wherein the deformation energy absorption zone includes an energy absorption device and a cab, and the energy absorption device includes a buffer, a crushing tube and a main energy absorption device, wherein the buffer, the crushing tube, and the main energy absorption device are sequentially compressed and deformed;

S3: the deformation energy absorption zone and the non-deformation zone of the scaled model of the head-car are constructed based on the similarity factors of the dynamic parameters;

a: constructing the deformation energy absorption zone includes: a deformation energy absorption characteristic curve of the scaled model of the head-car is obtained by multiplying each of a horizontal coordinate and a vertical coordinate of a deformation energy absorption characteristic curve of the head-car of the full-scale train by the similarity factors of matching dynamic parameters, then the buffer, the crushing tube, the main energy absorption device and the cab in the deformation energy absorption zone of the scaled model of the head-car are constructed based on the deformation energy absorption characteristic curve of the scaled model of the head-car and the dimension similarity factor;
wherein the deformation energy absorption characteristic curve is a curve characterizing a relationship between compressive displacement and impact force, and the area surrounded by the curve is the amount of the absorbed energy;

b: constructing the non-deformation zone includes: the non-deformation zone of the scaled model of the head-car is constructed according to the dimension similarity factor and the stiffness similarity factor;
wherein characteristic dimensions of the non-deformation zone on the scaled model of the head-car are obtained, based on equivalent scaling in dimension, by multiplying characteristic dimensions of the non-deformation zone on the head-car of the full-scale train by the dimension similarity factor, and include length, width, height and thickness;
each of the non-deformation zone on the head-car of the full-scale train and the non-deformation zone on the scaled model of the head-car is vertically divided into n units based on the equivalent scaling in dimension, and reinforcing ribs are added based on the equivalent scaling in stiffness, so that the ratio of the stiffness of each of the units on the head-car of the full-scale train to the stiffness of a respective one of the units on the scaled model of the head-car is equal to the stiffness similarity factor, wherein n is a positive integer greater than or equal to 2.

The structural characteristics of the train and the changes during the collision of the train are the existence of the deformation energy absorption zone and the non-deformation zone as well as the deformation in the deformation energy absorption zone divided into the deformation of the buffer, the crushing tube, the main energy absorption device and the cab. Therefore, according to the present invention, the head-car of the train is divided into a deformation energy absorption zone and a non-deformation zone. The energy absorption characteristic of the deformation energy absorption zone adopts the equivalent scaling in impact force, because the main function of the deformation energy absorption zone is to absorb the collision energy by plastic deformation, which requires a stable impact force to achieve an ordered deformation. The bearing characteristic of the non-deformation zone adopts the equivalent scaling in stiffness, because the main function of the non-deformation zone is to bear loads, which requires a high stiffness so that it does not deform during the collision. A divisional design is carried out in the present invention according to the actual needs and applications of parts of the train. The constructed equivalent scaled model of the head-car of the train satisfies both the similarity relationship of the dynamic characteristics and the similarity in structure, thereby guaranteeing the similarity in the impact force and the similarity in the stiffness of the car body and accurately restoring the collision process of the train.
The buffer, the crushing tube, the main energy absorption device, and the cab in the deformation energy absorption zone are designed respectively in the present invention, so that the internal structure of each part of the scaled model of the head-car conforms to that of the actual train.
In S4, the rule for arranging the reinforcing ribs in the divided unit is as follows: each of the surfaces of the unit is divided equally in the X and Y directions, and the reinforcing ribs are sequentially arranged at the equally divided positions. The equally divided arrangement allows the arrangement of the reinforcing ribs to be more evenly.
Further preferably, the similarity factors of the dynamic parameters further include an energy similarity factor, and constructing the deformation energy absorption region of the scaled model of the head-car in S3 includes:

A: the characteristic dimensions of the buffer on the scaled model of the head-car are obtained by multiplying characteristic dimensions of the buffer on the head-car of the full-scale train by the dimension similarity factor;

B: cross-sectional area of the crushing tube on the scaled model of the head-car is calculated according to an impact force corresponding to the crushing tube on the deformation energy absorption characteristic curve of the scaled model of the head-car, and cross-sectional area of the main energy absorption device on the scaled model of the head-car is calculated according to an impact force corresponding to the main energy absorption device on the deformation energy absorption characteristic curve of the scaled model of the head-car;

an amount of the absorbed energy of each of the crushing tube and the main energy absorption device on the scaled model of the head-car is acquired and a compressible length of each of the crushing tube and the main energy absorption device of the scaled model of the head-car is calculated; an initial design length of each of the crushing tube and the main energy absorption device on the scaled model of the head-car is obtained by multiplying a length of each of the crushing tube and the main energy absorption device on the full-scale train by the dimension similarity factor; then a design length of the crushing tube is obtained based on the compressible length and the initial design length of the crushing tube; a design length of the main energy absorption device is obtained based on the compressible length and the initial design length of the main energy absorption device;

wherein the amount of the absorbed energy of the crushing tube on the scaled model of the head-car is equal to the amount of the absorbed energy of the crushing tube on the head-car of the full-scale train multiplied by the energy similarity factor, and the amount of the absorbed energy of the main energy absorption device on the scaled model of the head-car is equal to the amount of the absorbed energy of the main energy absorption device on the head-car of the full-scale train multiplied by the energy similarity factor; the compressible length of the crushing tube on the scaled model of the head-car is equal to the amount of the absorbed energy of the crushing tube on the scaled model of the head-car divided by corresponding impact force, and the compressible length of the main energy absorption device on the scaled model of the head-car is equal to the amount of the absorbed energy of the main energy absorption device on the scaled model of the head-car divided by corresponding impact force;

C: characteristic dimensions of the cab on the scaled model of the head-car are obtained by multiplying characteristic dimensions of the cab on the head-car of the full-scale train by the dimension similarity factor; and a thickness of front bezel and a thickness of car body in the cab of the scaled model of the head-car are adjusted according to an impact force corresponding to the cab on the deformation energy absorption characteristic curve of the scaled model of the head-car.

The strength of the aluminum honeycomb multiplied by the cross-sectional area is equal to the compression platform force. According to the present invention, aluminum honeycomb with a certain strength is selected on the basis of obtaining the impact force corresponding to the crushing tube and the impact force corresponding to the main energy absorption device. The corresponding impact forces are reached by changing the cross-sectional area of the crushing tube made of aluminum honeycomb and the cross-sectional area of the main energy absorption device made of aluminum honeycomb. Since the compression platform force of the aluminum honeycomb multiplied by the compressible length is equal to the amount of the absorbed energy of the aluminum honeycomb, the amount of the absorbed energy of the crushing tube and the amount of the absorbed energy of the main energy absorption device on the scaled model of the head-car are obtained by multiplying the amount of the absorbed energy of the head-car of the full-scale train by the energy similarity factor. Since the impact force of the crushing tube and the impact force of the main energy absorption device on the scaled model of the head-car are known, the compressible length of the crushing tube and the compressible length of the main energy absorbing device can be obtained.

As for the cab, in the present invention, the thickness of the front bezel and the thickness of the car body of the cab are acquired based on the dimension similarity factor. For example, the thickness of the front bezel of the cab of the scaled model of the head-car is acquired based on the thickness of the front bezel of the cab of the head-car of the full-scale train multiplied by the dimension similarity factor, and the thickness of the car body of the cab of the scaled model of the head-car is acquired based on the thickness of the car body of the cab of the head-car of the full-scale train multiplied by the dimension similarity factor. The thickness of the front bezel and the thickness of the car body are adjusted according to the impact force of the cab, for example, by adopting finite element analysis software. The thickness of the front bezel and the thickness of the car body of the cab of the scaled model of the head-car are adjusted in the software such that the thickness of the front bezel and the thickness of the car body meet the impact force corresponding to the cab on the deformation energy absorption characteristic curve of the scaled model of the head-car.

Further preferably, $l_d^1$ represents the initial design length of the crushing tube on the scaled model of the head-car, and $l_d^2$ represents the initial design length of the main energy absorption device on the scaled model of the head-car; $l_c^1$ represents the compressible length of the crushing tube on the scaled model of the head-car, and $l_c^2$ represents the compressible length of the main energy absorption device on the scaled model of the head-car; the design length of the crushing tube and the design length of the main energy absorption device on the scaled model of the head-car are obtained by:

determining whether the following conditions are met: $l_d^1 \geq 1.2l_c^1$, $l_d^2 \geq 1.2l_c^2$,

if the condition of $l_d^1 \geq 1.2l_c^1$ is met, the length of the crushing tube on the scaled model of the head-car is equal to the initial design length $l_d^1$; if the condition of $l_d^2 \geq 1.2l_c^2$ is met, the length of the main energy absorption device on the scaled model of the head-car is equal to the initial design length $l_d^2$;

if the condition of $l_d^1 \geq 1.2l_c^1$ is not met, the length of the crushing tube on the scaled model of the head-car is equal to the initial design length $1.2l_c^1$, and if the condition of $l_d^2 \geq 1.2l_c^2$ is not met, the length of the main energy absorption device on the scaled model of the head-car is equal to the initial design length $1.2l_c^2$.

Further preferably, the crushing tube is made of cylindrical aluminum honeycomb; the main energy absorption device is made of rectangular aluminum honeycomb; and the rubber is adopted to imitate the buffer.

Further preferably, acquiring the similarity factors in S1 includes: obtaining the similarity factors of the dynamic parameters of the scaled model of the head-car using a similarity theory and an equation analysis method based on a dynamic balance equation of a thin-walled plate and shell.

The head-car of the train is a thin-walled plate and shell structure.

In the present invention, considering that the train is a thin-walled aluminum alloy structure, the similarity relationships between the dynamic characteristics of the thin-walled plate and shell are analyzed, so that the obtained scaled model of the train is more matched with the actual train, and the reliability of the obtained similarity factors is higher.

Further preferably, the similarity factors of the dynamic parameters further include a time similarity factor, a speed similarity factor, an acceleration similarity factor, a mass similarity factor, and an energy similarity factor.

The relationships between the similar factors of the dynamic parameters are as follows:

$$\lambda_l = \lambda, \ \lambda_F = \lambda^2, \ \lambda_t = \lambda, \ \lambda_v = 1, \ \lambda_a = \lambda^{-1}, \ \lambda_m = \lambda^3, \ \lambda_k = \lambda, \ \lambda_E = \lambda^3$$

wherein $\lambda$ is the dimension similarity factor, $\lambda_F$, $\lambda_t$, $\lambda_v$, $\lambda_a$, $\lambda_m$, $\lambda_k$, and $\lambda_e$ are respectively the force similarity factor, the time similarity factor, the speed similarity factor, the acceleration similarity factor, the mass similarity factor, the stiffness similarity factor, and the energy similarity factor.

The similarity relationships between of the dynamic characteristics of the thin-walled plate and shell are analyzed. The dynamic balance equation of the elastic thin plate is represented by the following equation (1):

$$D\frac{\partial^4 w}{\partial x^4} + 2D\frac{\partial^4 w}{\partial x^2 \partial y^2} + D\frac{\partial^4 w}{\partial y^4} = -\rho h \frac{\partial^2 w}{\partial t^2} \quad (1)$$

wherein $w$ is a deflection of the elastic thin plate, $h$ is a thickness of the elastic thin plate, $\rho$ is a density of the material, $D$ is a bending stiffness of the elastic thin plate, $E$ is an elastic modulus, $\mu$ is poisson's ratio, $t$ is time, x, y are respectively direction of the coordinates, wherein the bending stiffness D of the elastic thin plate is represented by:

$$D = \frac{Eh^3}{12(1-\mu^2)}$$

In the case that the vibration mode function representing the shape of vibration wave of the thin plate is $W(x, y)$, the deflection of the thin plate is represented by the following equation (2):

$$w = \left[A\cos(\omega t) + B\sin(wt)\right]W(x, y) \quad (2)$$

wherein $A$, $B$ are undetermined coefficients, $\omega$ is a natural frequency of the elastic thin plate. The following equation (3) can be obtained by substituting equation (2) into equation (1):

$$D\frac{\partial^4 W}{\partial x^4} + 2D\frac{\partial^4 W}{\partial x^2 \partial y^2} + D\frac{\partial^4 W}{\partial y^4} = \rho h \omega^2 W \quad (3)$$

Since both the full-scale train and the scaled model satisfy the equation (3), the following equation (4) can be obtained:

$$\begin{cases} D_p\dfrac{\partial^4 W_p}{\partial x_p^4} + 2D_p\dfrac{\partial^4 W_p}{\partial x_p^2 \partial y_p^2} + D_p\dfrac{\partial^4 W_p}{\partial y_p^4} = \rho_p h_p \omega_p^2 W_p \\[4mm] D_m\dfrac{\partial^4 W_m}{\partial x_m^4} + 2D_m\dfrac{\partial^4 W_m}{\partial x_m^2 \partial y_m^2} + D_m\dfrac{\partial^4 W_m}{\partial y_m^4} = \rho_m h_m \omega_m^2 W_m \end{cases} \quad (4)$$

wherein subscripts $p$ and $m$ represent the head-car of the full-scale train and the scaled model of the head-car respectively.
In the case that the full-scale train and the scaled model have the same boundary conditions, the boundary condition equation of the full-scale train is consistent with that of the scaled model regardless of whether the structure of the scaled model is distorted, and no special considerations are required. At this time, the similarity factor of the vibration mode function $W(x, y)$ is only related to the dimension similarity factor. The similarity relationships are induced as follows: $D_p = \lambda_D D_m$, $W_P = \lambda_W W_m$, $x_P = \lambda_x x_m$, $y_P = \lambda_y y_m$, $\rho_P = \lambda_\rho \rho_m$, $h_P = \lambda_h h_m$, $\omega_P = \lambda_\omega \omega_m$, wherein $D_p$ is the bending stiffness of thin-walled structure in the head-car of the full-scale train, $D_m$ is the bending stiffness of thin-walled structure in the scaled model of the head-car, $W_p$ is the vibration mode function of thin-wall structure in the head-car of the full-scale train, $W_m$ is the vibration mode function of thin-wall structure in the scaled model of the head-car, $x_p$ is the dimension of thin-walled structure in the head-car of the full-scale train in the $x$ direction, $x_m$ is the dimension of thin-walled structure in the scaled model of the head-car in the $x$ direction, $y_p$ is the dimension of thin-walled structure in the head-car of the full-scale train in the $y$ direction, $y_m$ is the dimension of thin-walled structure in the scaled model of the head-car in the $y$ direction, $\rho_p$ is the material density of thin-walled structure in the head-car of the full-scale train, $\rho_m$ is the material density of thin-walled structure in the scaled model of the head-car, $h_p$ is the thickness of thin-walled structure in the head-car of the full-scale train, $h_m$ is the thickness of thin-walled structure in the scaled model of the head-car, $\omega_p$ is the natural frequency of thin-walled structure in the head-car of the full-scale train, $\omega_m$ is the natural frequency of thin-walled structure in the scaled model of the head-car, $\lambda_D$, $\lambda_W$, $\lambda_x$, $\lambda_y$, $\lambda_\rho$, $\lambda_h$ and $\lambda_w$ are respectively a bending stiffness similarity factor, a vibration mode function similarity factor, a dimension similarity factor in the $x$ direction, a dimension similarity factor in the $y$ direction, a material density similarity factor, a thickness similarity factor and a natural frequency similarity factor.
Based on this, equation (5) can be obtained by equation (4):

$$\lambda_D\frac{\lambda_W}{\lambda_x^4}D_m\frac{\partial^4 W_m}{\partial x_m^4} + 2\lambda_D\frac{\lambda_W}{\lambda_x^2\lambda_y^2}D_m\frac{\partial^4 W_m}{\partial x_m^2 \partial y_m^2} + \lambda_D\frac{\lambda_W}{\lambda_y^4}D_m\frac{\partial^4 W_m}{\partial y_m^4} = \lambda_\rho\lambda_h\lambda_\omega^2\lambda_W\rho_m h_m\omega_m^2 W_m \quad (5)$$

In the case that the geometric characteristic of the thin plate in the $x$ direction is length $a$, and the geometric characteristic of the thin plate in the $y$ direction is length $b$, equation (5) can be written as:

$$\lambda_D\frac{\lambda_W}{\lambda_a^4}D_m\frac{\partial^4 W_m}{\partial x_m^4} + 2\lambda_D\frac{\lambda_W}{\lambda_a^2\lambda_b^2}D_m\frac{\partial^4 W_m}{\partial x_m^2 \partial y_m^2} + \lambda_D\frac{\lambda_W}{\lambda_b^4}D_m\frac{\partial^4 W_m}{\partial y_m^4} = \lambda_\rho\lambda_h\lambda_\omega^2\lambda_W\rho_m h_m\omega_m^2 W_m \quad (6)$$

wherein $\lambda_a$ is the similarity factor of length $a$ and $\lambda_b$ is the similarity factor of length $b$. It can be known from the equation analysis method, the similarity factors in different terms of polynomial formula (6) are equal, thereby obtaining:

$$\lambda_D\frac{\lambda_W}{\lambda_a^4} = \lambda_D\frac{\lambda_W}{\lambda_a^2\lambda_b^2} = \lambda_D\frac{\lambda_W}{\lambda_b^4} = \lambda_\rho\lambda_h\lambda_\omega^2\lambda_W \quad (7)$$

Since $D = \dfrac{Eh^3}{12(1-\mu^2)}$ , it follows that $\lambda_D = \dfrac{D_p}{D_m} = \dfrac{E_p h_p^3}{12(1-\mu_p^2)} \Big/ \dfrac{E_m h_m^3}{12(1-\mu_m^2)} = \dfrac{E_p h_p^3}{E_m h_m^3} = \lambda_E \lambda_h^3 = \lambda_h^3$ ;

When constructing the scaled model of the head-car of the train, the dimension similarity factor is $\lambda$, and the material properties remain unchanged, that is, $\lambda_a = \lambda_b = \lambda_h = \lambda$, $\lambda_E = \lambda_\mu = \lambda_\rho = 1$. Therefore, the similarity factor of natural frequency $\lambda_w$ of the elastic thin plate obtained according to equation (7) is $1/\lambda$, and the time similarity factor is

$$\lambda_t = \frac{1}{\lambda_\omega} = \lambda .$$

In the research on the train collision, the main dynamic parameters considered are stiffness, deformation, impact speed, acceleration, impact force and amount of the absorbed energy of the car body. The remaining physical parameters have little effect on the dynamic response characteristics of the train and can be ignored. Similarity factors of other dynamic parameters can be obtained according to the dimension similarity factor and the time similarity factor.

As shown in Table 1, the speed similarity factor $\lambda_v = \dfrac{\lambda_l}{\lambda_t} = 1$ , the acceleration similarity factor $\lambda_a = \dfrac{\lambda_l}{\lambda_t^2} = \dfrac{1}{\lambda}$ , the

mass similarity factor $\lambda_m = \lambda_\rho \lambda_l^3 = \lambda^3$ , the force similarity factor $\lambda_F = \lambda_m \lambda_a = \lambda^2$, the stiffness similarity factor

$\lambda_K = \dfrac{\lambda_F}{\lambda_t} = \lambda$ , the energy similarity factor $\lambda_E = \lambda_F \lambda_l = \lambda^3$.

Table 1. Similarity factors of the dynamic parameters of the equivalent scaled model

| Physical Quantity | Similarity Factor |
| --- | --- |
| Displacement ($l$) | $\lambda_l = l_m / l_p = \lambda$ |
| Force ($F$) | $\lambda_F = F_m / F_p = \lambda^2$ |
| Time ($t$) | $\lambda_t = t_m / t_p = \lambda$ |
| Speed ($v$) | $\lambda_V = v_m / v_p = 1$ |
| Acceleration ($a$) | $\lambda a = a_m / a_p = \lambda^{-1}$ |
| Mass ($m$) | $\lambda_m = m_m / m_p = \lambda^3$ |
| Stiffness ($k$) | $\lambda_k = k_m / k_p = \lambda$ |
| Energy ($E$) | $\lambda_E = E_m / E_p = \lambda^3$ |

Further preferably, the stiffness of the car body of each unit is analyzed by adopting finite element software in S4, wherein the loading force for the scaled model of the head-car is set to be equal to a loading force for the head-car of the full-scale train multiplied by the force similarity factor, a collision speed of the scaled model of the head-car is set to be equal to a collision speed of the head-car of the full-scale train multiplied by the speed similarity factor, and collision time of the scaled model of the head-car is set to be equal to collision time of the head-car of the full-scale train multiplied by the time similarity factor.

It should be understood that the above-mentioned rules are set to make the equivalence between the scaled model of the head-car and the head-car of the full-scale train conform to the principle of equivalent scaling.

Further preferably, the method further includes performing a collision simulation and a design optimisation of the scaled model of the head-car obtained in S4, which include:

S5: the dimension similarity factor is initialized, and a numerical simulation of the collision of constructed scaled model of the head-car is performed to obtain an acceleration-time curve at a center of gravity of the scaled model of the head-car, and then an error between an average acceleration value at the center of gravity of the scaled model of the head-car and an average acceleration value at a center of gravity of the head-car of the full-scale train within a preset period is adopted as an error of the scaled model of the head-car and the error of the scaled model of the head-car is calculated;

S6: it is determined whether the calculated error is greater than or equal to a preset error threshold, and if the calculated error is greater than or equal to the preset error threshold, S7 is performed; if the calculated error is not greater than or equal to the preset error threshold, the obtained scaled model of the head-car is adopted as a target scaled model of the head-car;

S7: a thickness of the reinforcing rib, a thickness of a front bezel and a thickness of a car body on the scaled model of the head-car are adopted as optimised design variables and a minimum error is adopted as an optimisation target, and an optimisation range of each of the design variables is acquired, and then they are sampled within the optimisation range to obtain several samples of the scaled model of the head-car;

S8: the error of each of the samples of the scaled model of the head-car is calculated, then an optimal sample of the scaled model of the head-car based on the optimisation target is acquired, and then it is determined whether an error of the optimised sample of the scaled model of the head-car is greater than or equal to the preset error threshold, and if the error of the optimised sample of the scaled model of the head-car is greater than or equal to the preset error threshold, S7 is returned to resample; if the error of the optimised sample of the scaled model of the head-car is not greater than or equal to the preset error threshold, the obtained optimised sample of the scaled model of the head-car is adopted as the target scaled model of the head-car.

According to the "EN15227-2008 Requirements on the Crashworthiness of Car Body", the preset error threshold is preferably 10% in this embodiment. Since the thickness of the thin-walled structure has a great influence on the strength of the equivalent scaled model of the head-car, a thickness $d_1$ of the reinforcing rib, a thickness $d_2$ of the front bezel and a thickness $d_3$ of the car body are selected as optimised design variables from design parameters of the equivalent scaled model of the head-car. In order to ensure that the error of the total mass of the head-car is controlled within 10%, values of the three variables need to be determined: $d_{1min} \sim d_{1max}$, $d_{2min} \sim d_{2max}$ and $d_{3min} \sim d_{3max}$. The model of a response surface represents the correlation between design variables and errors, and the influence of design variables on the optimisation goal can be analyzed by the model of the response surface.

Further preferably, the error between the average acceleration values at the centers of gravity during a compression stage of the crushing tube and the error between the average acceleration values at the centers of gravity during a compression stage of the main energy absorption device are adopted as the errors of the scaled model of the head-car, and calculation formulas of the errors of the scaled model of the head-car are as follows:

$$w_1 = \left| \frac{a_{1m}/\lambda_a - A_{1m}}{A_{1m}} \right| \times 100\%$$

$$w_2 = \left| \frac{a_{2m}/\lambda_a - A_{2m}}{A_{2m}} \right| \times 100\%$$

wherein $w_1$ is the error of the scaled model of the head-car corresponding to the compression stage of the crushing tube and $w_2$ is the error of the scaled model of the head-car corresponding to the compression stage of the main energy absorption device; $a_{1m}$ is an average acceleration at the center of gravity of the scaled model of the head-car during the compression stage of the crushing tube and $a_{2m}$ is an average acceleration at the center of gravity of the scaled model of the head-car during the compression stage of the main energy absorption device; $A_{1m}$ is an average acceleration at the center of gravity of the head-car of the full-scale train during the compression stage of the crushing tube and $A_{2m}$ is an average acceleration at the center of gravity of the head-car of the full-scale train during the compression stage of the main energy absorption device; $\lambda_a$, is the acceleration similarity factor.

On the other hand, the present invention provides a scaled model of the head-car based on the method described above, which includes a deformation energy absorption zone and a non-deformation zone. The deformation energy absorption zone includes an energy absorption device and a cab. The energy absorption device includes a buffer, a crushing tube and a main energy absorption device.

The rubber is adopted to imitate the buffer, the crushing tube is made of cylindrical aluminum honeycomb, and the main energy absorption device is made of rectangular aluminum honeycomb.

Advantageous Effects

1. The structural characteristics of the train and the changes during the collision of the train are the existence of the deformation energy absorption zone and the non-deformation zone as well as the deformation in the deformation energy absorption zone divided into the deformation of the buffer, the crushing tube, the main energy absorption device and the cab. Therefore, the present invention proposes performing an equivalent scaling of the head-car of the train by means of a divisional design. The deformation energy absorption zone adopts an equivalent scaling in impact force, because the main function of the deformation energy absorption zone is to absorb the collision energy by plastic deformation, which requires a stable impact force to achieve an ordered deformation. The non-deformation zone adopts an equivalent scaling in stiffness, because the main function of the non-deformation zone is to bear loads, which requires height stiffness so that it does not deform during the collision. Therefore, it is ensured that the impact force/the stiffness of car body of the full-scale train is similar to that of the scaled model, so that the dynamic characteristics of the full-scale train during the collision are similar to that of the scaled model during the collision.

2. Considering that the train is mainly formed of a thin-walled aluminum alloy structure, the present invention has deduced the similar factors of the dynamic parameters of the thin-walled plate and shell, which are more suitable for scaling the high-speed train in which the car body thereof is formed of a thin-walled aluminum alloy structure.

3. After obtaining the scaled model of the head-car, the present invention tries to perform a simulation test including: the collision results of the head-car of the full-scale train are compared, and the average acceleration at the center of gravity is adopted as the evaluation index to evaluate the error of the equivalent scaled model of the head-car. The invention proposes to reduce the error of the equivalent scaled model of the head-car of the train by a test design and optimisation method, thereby obtaining an accurate equivalent scaled model of the head-car of the train.

BRIEF DESCRIPTION OF THE DRAWINGS

FIG. 1 is a design flow chart of a method for constructing a scaled model of a head-car of a train based on force equivalence and stiffness equivalence;

FIG 2 is a schematic view of divided zones of a head-car of a full-scale train;

FIG 3 is an energy absorption characteristic curve of the head-car of the full-scale train;

FIG. 4 is a schematic view of a design for the stiffness of a non-deformation zone of the equivalent scaled model of the head-car of the train, wherein (a) is a schematic view of differential for the stiffness of the non-deformation zone of the head-car of the full-scale, and (b) is a schematic view of differential for the stiffness of the non-deformation zone of the scaled model of the head-car;

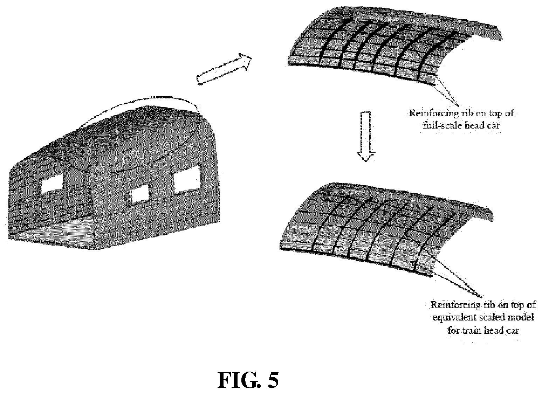

FIG 5 is a schematic view of a design for reinforcing ribs of the equivalent scaled model of the head-car of the train;

FIG. 6 is a graph showing an acceleration-time curve at the center of gravity obtained by the simulation, wherein (a) is a graph showing an acceleration-time curve at the center of gravity of the head-car of the full-scale during the collision simulation, and (b) is a graph showing an acceleration-time curve at the center of gravity of the scaled model of the head-car during the collision simulation;

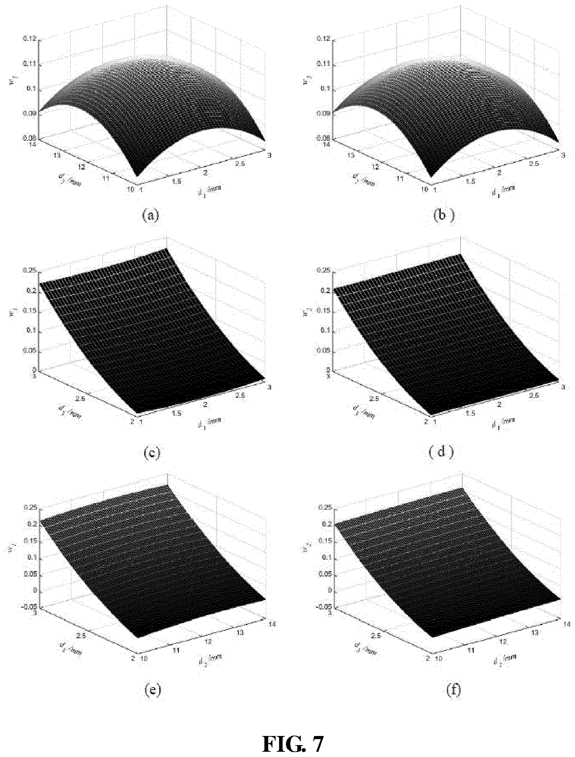

FIG. 7 is a schematic view of a model of the response surface of the equivalent scaled model of the head-car of the train, wherein (a) is a schematic view of the influence of the thickness $d_1$ of the reinforcing rib and the thickness $d_2$ of the front bezel on the error $\omega_1$, (b) is a schematic view of the influence of the thickness $d_1$ of the reinforcing rib and the thickness $d_2$ of the front bezel on the error $\omega_2$, (c) is a schematic view of the influence of the thickness $d_1$ of the reinforcing rib and the thickness $d_3$ of the car body on the error $\omega_1$, (d) is a schematic view of the influence of the thickness $d_1$ of the reinforcing rib and the thickness $d_3$ of the car body on the error $\omega_2$, (e) is a schematic view of the influence of the thickness $d_2$ of the front bezel and the thickness $d_3$ of the car body on the error $\omega_1$, (f) is a schematic view of the influence of the thickness $d_2$ of the front bezel and the thickness $d_3$ of the car body on the error $\omega_2$.

DETAILED DESCRIPTION

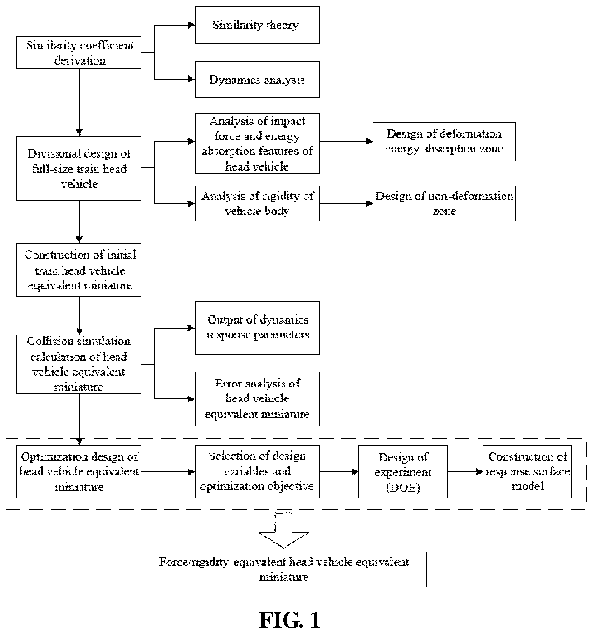

The present invention will be further described below in conjunction with embodiments.
As shown in FIG. 1, a method for constructing a scaled model of the head-car of the train based on force equivalence and stiffness equivalence according to the present invention mainly includes the following four aspects:

1. derivation of similarity factors of dynamic parameters;

2. divisional design of the head-car;

3. construction of the initial scaled model of the head-car;

4. collision simulation calculation of the scaled model of the head-car and optimisation of the scaled model of the head-car.

1. Regarding the derivation of similarity factors of dynamic parameters: considering that the train is formed of a thin-walled aluminum alloy structure, the similarity relationships between the dynamic characteristics of the thin-walled plate and shell are analyzed. That is to say, the similarity factors of the dynamic parameters of the scaled model of the head-car are obtained using a similarity theory and an equation analysis method based on the dynamic balance equation of the thin-walled plate and shell. The obtained similarity factors are shown in Table 1, which are not repeatedly described here.

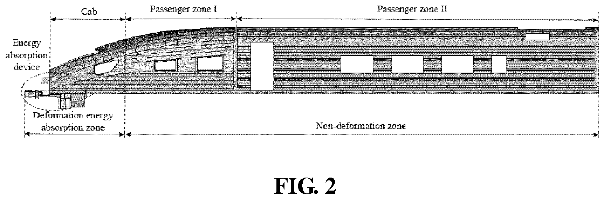

2. Regarding the divisional design of the head-car: As shown in Fig. 2, the collision process of the train is divided into two phases. The first phase is a deformation energy absorption phase, wherein an energy absorption device and a cab at the end of the train perform compression in stages and absorb the energy. The second phase is a load-bearing phase, wherein loads are borne by the passenger zone of the train without deformation of a car body. Therefore, the structure of the head-car of the train is divided into a deformation energy absorption zone which includes the energy absorption device and the cab and a non-deformation zone which includes passenger zone I and passenger zone II. The energy absorption device includes a buffer, a crush tube, and a main energy absorption device. Therefore, the scaled model of the head-car according to the present invention is also divided into a deformation energy absorption zone and a non-deformation zone.

(1) Design of the Deformation Energy Absorption Zone:

A deformation energy absorption characteristic curve of the scaled model of the head-car is obtained by multiplying each of a horizontal coordinate and a vertical coordinate of a deformation energy absorption characteristic curve of the head-car of the full-scale train by the similarity factors of matching dynamic parameters.

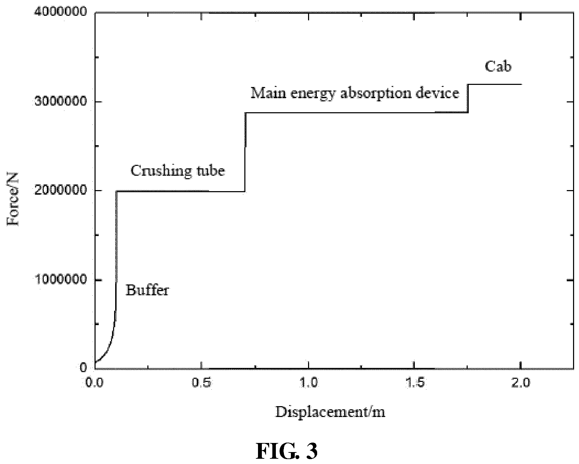

Fig. 3 shows the deformation energy absorption characteristic curve of the head-car of the full-scale train, in which the abscissa represents the compressive displacement, the ordinate represents the impact force, and the area surrounded by the curve is the amount of the absorbed energy. The curve describes the compression phase of the energy absorption deformation zone during the collision of the train. The buffer is compressed to perform a buffer function, and then the crushing tube, the main energy absorption device, and the cab are sequentially compressed and deformed. A deformation energy absorption characteristic curve of the scaled model of the head-car is obtained by multiplying the ordinate of the deformation energy absorption characteristic curve of the full-scale head-car by the impact force similarity factor $\lambda_F$ and multiplying the abscissa of the deformation energy absorption characteristic curve of the full-scale head-car by the displacement similarity factor $\lambda_l$, which includes the impact force curve of the buffer, the compression platform force $F_{1m}$ of the crushing tube, the compression platform force $F_{2m}$ of the main energy absorption device and the compression platform force $F_{3m}$ of the cab.

The dimensions of the buffer, the crushing tube, the main energy absorption device and the cab in the deformation energy absorption zone of the scaled model of the head-car are designed based on the deformation energy absorption characteristic curve of the scaled model of the head-car and the dimension similarity factor.

Regarding the buffer: the corresponding characteristic dimensions of the buffer on the scaled model of the head-car are obtained by multiplying the characteristic dimensions of the buffer on the head-car of the full-scale train by the dimension similarity factor; in addition, a rubber buffer is usually adopted in the actual train, thus a rubber is adopted to imitate the buffer in the scaled model of the head-car of the train.

Regarding the crushing tube: on the one hand, the cross-sectional area of the crushing tube on the scaled model of the head-car is designed according to the compression platform force $F_{1m}$ corresponding to the crushing tube on the deformation energy absorption characteristic curve of the scaled model of the head-car.

A cylindrical aluminum honeycomb is adopted to simulate the crushing tube. The strength of the aluminum honeycomb multiplied by the cross-sectional area is equal to the compression platform force. The compression platform force $F_{1m}$ of the corresponding crushing tube can be obtained by selecting aluminum honeycomb with different strengths and changing the cross-sectional area of the aluminum honeycomb.

On the other hand, the compressible length of the crushing tube on the scaled model of the head-car is designed according to the amount of the absorbed energy of the crushing tube on the scaled model of the head-car. The initial design length of the crushing tube on the scaled model of the head-car is obtained by multiplying the length of the crushing tube on the full-scale train by the dimension similarity factor. The design length of the crushing tube is obtained based on the compressible length and the initial design length of the crushing tube. The design length of the crushing tube is obtained based on the compressible length and the initial design length of the crushing tube.

Since the compression platform force of the aluminum honeycomb multiplied by the compressible length is equal to the amount of the absorbed energy of the aluminum honeycomb, the amount of the absorbed energy of the aluminum honeycomb is designed by designing the compressible length of the aluminum honeycomb, so that the amount of the absorbed energy of the crushing tube of the scaled model of the head-car is equal to the amount of the absorbed energy of the crushing tube of the head-car of the full-scale train multiplied by the energy similarity factor $\lambda_E$. Since the compressible length is related to the design length, the relationship between the compressible length, the initial design length and the final design length in the present invention is defined as follows:

In the case that $l_d^1$ represents the initial design length of the crushing tube on the scaled model of the head-car, and $l_c^1$ represents the compressible length of the crushing tube on the scaled model of the head-car, the design length of the crushing tube on the scaled model of head-car are obtained according to:

determine whether the following condition is met: $l_d^1 \geq 1.2 l_c^1$;

If the condition of $l_d^1 \geq 1.2 l_c^1$ is met, the length of the crushing tube on the scaled model of the head-car is equal to the initial design length $l_d^1$; if the condition of $l_d^1 \geq 1.2 l_c^1$ is not met, the length of the crushing tube on the scaled model of the head-car is equal to the initial design length $1.2 l_c^1$.

Regarding the main energy absorption device: on the one hand, the cross-sectional area of the main energy absorption device on the scaled model of the head-car is designed according to the compression platform force $F_{2m}$ corresponding to the main energy absorption device on the deformation energy absorption characteristic curve of the scaled model of the head-car.

A rectangular aluminum honeycomb is adopted to simulate the main energy absorption device. The strength of the aluminum honeycomb multiplied by the cross-sectional area is equal to the compression platform force. The compression platform force $F_{2m}$ of the corresponding crushing tube can be obtained by selecting aluminum honeycomb with different strengths and changing the cross-sectional area of the aluminum honeycomb.

On the other hand, the compressible length of the main energy absorption device on the scaled model of the head-car is designed according to the amount of the absorbed energy of the main energy absorption device on the scaled model of the head-car. The initial design length of the main energy absorption device on the scaled model of the head-car is obtained by multiplying the length of the main energy absorption device on the full-scale train by the dimension similarity factor. The design length of the main energy absorption device is obtained based on the compressible length and the initial design length of the main energy absorption device. The design length of the main energy absorption device is obtained based on the compressible length and the initial design length of the main energy absorption device.

Since the compression platform force of the aluminum honeycomb multiplied by the compressible length is equal to the amount of the absorbed energy of the aluminum honeycomb, the amount of the absorbed energy of the aluminum honeycomb is designed by designing the compressible length of the aluminum honeycomb, so that the amount of the absorbed energy of the main energy absorption device of the scaled model of the head-car is equal to the amount of the absorbed energy of the main energy absorption device of the head-car of the full-scale train multiplied by the energy similarity factor $\lambda_E$. Since the compressible length is related to the design length, the relationship between the compressible length, the initial design length and the final design length in the present invention is defined as follows:

In the case that $l_d^1$, $l_d^2$ represents the initial design length of the main energy absorption device on the scaled model of the head-car, and $l_c^2$ represents the compressible length of the main energy absorption device on the scaled model of the head-car, the design length of the main energy absorption device on the scaled model of head-car are obtained according to:

determine whether the following condition is met: $l_d^2 \geq 1.2 l_c^2$;

If the condition of $l_d^2 \geq 1.2 l_c^2$ is met, the length of the main energy absorption device on the scaled model of the head-car is equal to the initial design length $l_d^2$; if the condition of $l_d^2 \geq 1.2l_c^2$ is not met, the length of the main energy absorption device on the scaled model of the head-car is equal to the initial design length $1.2l_c^2$.

Regarding the cab: the corresponding characteristic dimensions (including length, width, height, thickness) of the cab on the scaled model of the head-car are obtained by multiplying the characteristic dimensions of the cab on the head-car of the full-scale train by the dimension similarity factor. The thickness $d_2$ of the front bezel and the thickness $d_3$ of the car body in the cab the scaled model of the head-car is designed according to the compression platform force $F_{3m}$ corresponding to the cab on the deformation energy absorption characteristic curve of the scaled model of the head-car, so that the compression platform force of the cab reaches $F_{3m}$.

(2) Design of the non-deformation zone: the characteristic dimensions of the non-deformation zone on the scaled model of the head-car are obtained, based on an equivalent scaling in dimension, by multiplying characteristic dimensions of the non-deformation zone on the head-car of the full-scale train by the dimension similarity factor. Each of the non-deformation zone on the head-car of the full-scale train and the non-deformation zone on the scaled model of the head-car is vertically divided into n units based on the equivalent scaling in dimension. Reinforcing ribs are added based on an equivalent scaling in stiffness, so that the ratio of the stiffness of each of the units on the head-car of the full-scale train to the stiffness of a respective one of the units on the scaled model of the head-car is equal to the stiffness similarity factor.

Regarding the stiffness equivalence, the stiffness of non-deformation zone of the full-scale head-car is a continuous curve. According to the structural characteristics (such as strength of the car body at the door and that strength of the car body at the window are different) of non-deformation zone of the head-car of the full-scale train, the structure of the non-deformation zone is vertically differentiated into *n* units (each of the door and the window needs to be completely located in one unit). When each of the head-car of the full-scale train and the scaled model of the head-car is divided into units, the dimensions are scaling according to the dimension similarity factor. Therefore, each of the units in the full-scale train corresponds to a respective one of the units in the scaled model of the head-car.

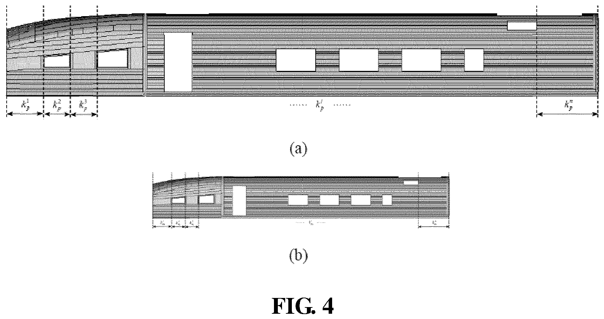

In the case that the stiffness of the car body in each differential unit is the same, the stiffness of the car body in the i$^{th}$ unit is $k_p^i$, as shown in Fig. 4(a). Therefore, the stiffness curve of the non-deformation zone of the actual full-scale car can be estimated by $n$ constant of the stiffness of the car body. As shown in Fig. 4(b), the non-deformation zone of the scaled model of the train is also differentiated into $n$ units. In the case that the stiffness of the car body in each differential unit is the same, the stiffness of the car body in the i$^{th}$ unit is $k_m^i$. The stiffness of the car body of each unit is scaling according to the stiffness similarity factor of step 1 to obtain the stiffness $k_m^1, k_m^2 \cdots k_m^n$ of each differential unit in the non-deformation zone of the scaled model of the head-car. Considering the complete similarity, scaling directly the dimension of the head-car of the actual full-scale train cannot guarantee the similarity of the stiffness of the car body. Therefore, the present invention designs reinforcing ribs according to the structure of the head-car of the actual full-scale train, so that the stiffness of the differential unit in the non-deformation zone of the scaled model matches the stiffness of the differential unit in the non-deformation zone of the head-car of the actual full-scale train, that is, there is

a relation: $\dfrac{k_m}{k_p} = \lambda_k$. The top of the passenger zone I illustrates the design of the reinforcing ribs of the scaled model of the head-car, as shown in Fig. (5). The actual car body is made of the thin-walled aluminum alloy and provided with reinforcing ribs inside the car body. In the case that the scaling is directly carried out, not only the processing accuracy cannot be achieved, but also the design stiffness of the scaled model cannot be satisfied. Therefore, when designing the scaled model, the structure is equally divided in the x and y directions, the density of the reinforcing rib is gradually increased until the stiffness of the scaled model reaches the design value $k_m^i$. The design of other reinforcing ribs follows this principle. For example, in i$^{th}$ unit, reinforcing ribs are added at the top surface and arranged at the equally divided positions. However, it should be noted that in a certain unit, the reinforcing rib is not limited to be arranged at the top, but may also be arranged at the bottom or side.

It should be noted that this step is completed in the finite element software, thus the relevant collision parameters need to be set before implementation. For example, the loading force of the scaled model of the head-car is set to equal to the loading force of the head-car of the full-scale train multiplied by the force similarity factor, the collision speed of the scaled model of the head-car is set to equal to the collision speed of the head-car of the full-scale train multiplied by the speed similarity factor, and the collision time of the scaled model of the head-car is equal to the collision time of the head-car of the full-scale train multiplied by the time similarity factor. The collision parameter is set based on the similarity factors to allow the collision conditions to be equivalent.

3. Construction of the Initial Scaled model of the Head-car

The dimension similarity factor is initialized, i.e., the value of the dimension similarity factor is set. For example, if $\lambda$ = 1/8, then the speed similarity factor, the acceleration similarity factor, the time similarity factor, the mass similarity factor, the force similarity factor, the stiffness similarity factor, and the energy similarity factor obtained according to Table 1 are respectively $\lambda_v$ = 1, $\lambda_a$ = 8, $\lambda_t$ = 1/8, $\lambda_m$ =1/512, $\lambda_F$ = 1/64 , $\lambda_k$ = 1/8, $\lambda_E$ = 1/512. Therefore, an equivalent scaled model (1:8) of the head-car of the train is constructed.

4. Collision Simulation Calculation of the Scaled model of the Head-car and Optimisation of the Scaled model of the Head-car

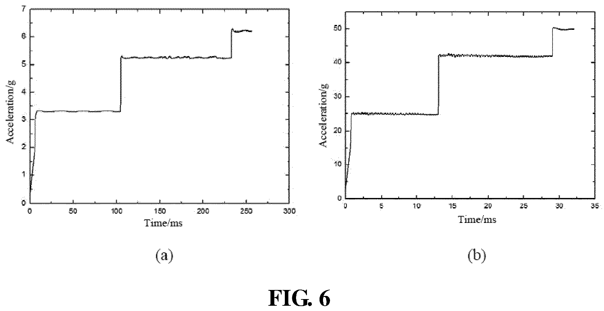

A finite element model of the collision of the initial equivalent scaled model of the head-car of the train is established, the acceleration response is output and compared with collision test or simulation results of the head-car of the full-scale train, and the error of the initial equivalent scaled model of the head-car of the train is analyzed. This embodiment specifically includes: the collision simulation result of the head-car of the full-scale train is compared with the collision simulation result of the scaled model (1:8) of the head-car, both the material parameters and the collision conditions of the head-car of the full-scale train and the scaled model of the head-car are the same, the acceleration-time curve at the center of gravity is outputted. Fig. 6 shows the acceleration-time curve at the center of gravity, wherein (a) is the acceleration-time curve of the head-car of the full-scale train; (b) is the acceleration-time curve of the scaled model of the head-car. It can be seen from the figures that the change trend of the above two acceleration-time curves is the same.

Based on the acceleration-time curve, according to the present invention, an error between the average acceleration value at the center of gravity of the scaled model of the head-car and the average acceleration value at the center of gravity of the head-car of the full-scale train during the compression phase of the crushing tube and an error between the average acceleration value at the center of gravity of the scaled model of the head-car and the average acceleration value at the center of gravity of the head-car of the full-scale train during the compression phase of the main energy absorption device are adopted as the errors of the scaled model of the head-car, and the errors of the scaled model of the head-car are calculated. As shown in Table 2, the average acceleration value at the center of gravity during the compression phase of the crushing tube and the average acceleration value at the center of gravity during the compression phase of the main energy absorption device during the collision simulation of the head-car of the full-scale train are 2.9g and 5.9g respectively. The average acceleration value at the center of gravity during the compression phase of the crushing tube and the average acceleration value at the center of gravity during the compression phase of the main energy absorption device during the collision simulation of the scaled model of the head-car are respectively 20.4g and 43.8g. The average acceleration values 20.4g and 43.8g are divided by the acceleration similarity factor $\lambda_a$ = 8, then the average acceleration value at the center of gravity during the compression phase of the crushing tube and the average acceleration value at the center of gravity during the compression phase of the main energy absorption device during the collision simulation of the corresponding head-car of the full-scale train are respectively 2.55g and 5.475g. The error of the average acceleration value at the center of gravity during the compression phase of the crushing tube and the error of the average acceleration value at the center of gravity during the compression phase of the main

$$\omega_1 = \left| \frac{2.55 - 2.9}{2.9} \right| \times 100\% \approx 12.1\% \quad ,$$

energy absorption device of the scaled model are calculated as

$$\omega_2 = \left| \frac{5.475 - 5.9}{5.9} \right| \times 100\% \approx 7.2\% \quad ,$$

respectively.

Table 2. simulation result of the initial equivalent scaled model of the head-car of the train

| acceleration in the longitudinal direction at the center of gravity (g) | the compression phase of the crushing tube | the compression phase of the main energy absorption device |
|---|---|---|
| the collision simulation of the head-car of the full-scale train | 2.9 | 5.9 |
| the collision simulation of the equivalent scaled model of the head-car of the train | 20.4 | 43.8 |

(continued)

| acceleration in the longitudinal direction at the center of gravity (g) | the compression phase of the crushing tube | the compression phase of the main energy absorption device |
| --- | --- | --- |
| the error of the equivalent scaled model of the head-car of the train (%) | 12.1 | 7.2 |

It is determined whether the obtained error is greater than or equal to the preset error threshold, and if the error is greater than or equal to the preset error threshold, the optimisation process is carried out; if the error is not greater than or equal to the preset error threshold, the obtained scaled model of the head-car is adopted as the target scaled model of the head-car. In this embodiment, the error of the average acceleration should be controlled within 10% according to "EN15227-2008 Requirements on the Crashworthiness of Car Body".

Optimisation process (in the present invention, an optimisation software such as Hyperstudy is adopted to optimise the initial equivalent scaled model of the head-car of the train) is as follow.

The thickness $d_1$ of the reinforcing rib , the thickness $d_2$ of the front bezel and the thickness $d_3$ of the car body are selected as optimised design variables and the minimum error of the average acceleration at the center of gravity is adopted as the optimisation target (including the error $\omega_1$ of the average acceleration at the center of gravity during the compression phase of the crushing tube and the error $\omega_2$ of the average acceleration at the center of gravity during the compression phase of the main energy absorption device).

The value ranges $d_{1min} \sim d_{1max}$, $d_{2min} \sim d_{2max}$, $d_{3min} \sim d_{3max}$ of the three design variables are acquired. In this embodiment, the value ranges of the three design variables are $1 \leq d_1 \leq 3$, $10 \leq d_2 \leq 14$, and $2 \leq d_3 \leq 3$.

A three-order Box-Behnken method is adopted to sample within the optimisation range of the design variables to obtain several samples of the scaled model of the head-car. In this embodiment, 13 sample points are selected.

The error $(\omega_1, \omega_2)$ of each sample of the scaled model of the head-car is calculated.

The minimum errors $\omega_1$ and $\omega_2$ of the average acceleration at the center of gravity during the collision of the equivalent scaled model of the train are adopted as optimisation targets to perform a multi-objective optimisation to obtain the optimal solutions $(d_1, d_2, d_3)$ by using the existing optimisation method. It is determined whether each of the errors $(\omega_1, \omega_2)$ of the scaled model of the head-car corresponding to the optimal solutions is greater than or equal to the preset error threshold. If each of the errors $(\omega_1, \omega_2)$ of the scaled model of the head-car corresponding to the optimal solutions is greater than or equal to the preset error threshold, resample is performed; If each of the errors $(\omega_1, \omega_2)$ of the scaled model of the head-car corresponding to the optimal solutions is not greater than or equal to the preset error threshold, the obtained optimised sample of the scaled model of the head-car is the target scaled model of the head-car. A set of optimal solution obtained in this embodiment is that $d_1 = 1.1mm$, $d_2 = 10mm$, $d_3 = 2mm$. At this time, the minimum error of the average acceleration at the center of gravity of the equivalent scaled model of the head-car of the train during the compression phase of the crushing tube is that $\omega_1 = 7.76\%$ , and the minimum error of the average acceleration at the center of gravity of the equivalent scaled model of the head-car of the train during the compression phase of the man energy absorption device is that $\omega_2 = 5.98\%$ , which satisfy "EN15227-2008 Requirements on the Crashworthiness of Car Body".

The response surface model may also be established based on the errors $\omega_1$ and $\omega_2$ of the average acceleration at the center of gravity of each of the samples of scaled model of the head-car. Fig. 7 is a schematic view of a response surface established by least square method according to this embodiment. Figs. 7(a) and 7(b) show convex curved surfaces, indicating that the thickness $d_1$ of the reinforcing rib has the same effect on $\omega_1$ and $\omega_2$ as the thickness $d_2$ of the front bezel. That is to say, as $d_1$ increases, each of $\omega_1$ and $\omega_2$ presents a tendency of increasing at first and then decreasing; and as $d_2$ increases, each of $\omega_1$ and $\omega_2$ also presents a tendency of increasing at first and then decreasing. Figs. 7(c) and 7(d) show inclined curved surfaces, indicating that the thickness $d_1$ of the reinforcing rib has the same effect on $\omega_1$ and $\omega_2$ as the thickness $d_3$ of the car body. That is to say, as $d_3$ increases, each of $\omega_1$ and $\omega_2$ presents a tendency of increasing; $d_1$ has a less influence on $\omega_1$ and $\omega_2$ compared with $d_3$. Figs. 7(e) and 7(f) show inclined curved surfaces, indicating that the thickness $d_2$ of the front bezel has the same effect on $\omega_1$ and $\omega_2$ as the thickness $d_3$ of the car body. That is to say, as $d_3$ increases, each of $\omega_1$ and $\omega_2$ presents a tendency of increasing; $d_2$ has a less influence on $\omega_1$ and $\omega_2$ compared with $d_3$. In summary, within the design ranges of the thickness $d_1$ of the reinforcing rib, the thickness $d_2$ of the front bezel and the thickness $d_3$ of the car body, each of $\omega_1$ and $\omega_2$ necessarily has a minimum value, and each of $\omega_1$ and $\omega_2$ has a minimum value at the same time. $\omega_1$ and $\omega_2$ are respectively the error of the scaled model of the head-car corresponding to the compression phase of the crushing tube and the error of the scaled model of the head-car corresponding to the compression phase of the main energy absorption device during the same collision.

It should be emphasized that the examples described in the present invention are illustrative rather than limiting. Therefore, the present invention is not limited to the examples described in the specific embodiments. Other embodiments obtained by those skilled in the art according to the technical solutions of the present invention, such as modifications and substitutions without departing from the spirit and scope of the present invention, belong to the scope of protection of the present invention.

**Claims**

1. A method for constructing a scaled model of a head-car of a train based on force equivalence and stiffness equivalence, **characterized in that** the method comprises the following steps:

   S1: acquiring similarity factors of dynamic parameters of the scaled model of the head-car relative to a full-scale train;
   wherein the similarity factors of the dynamic parameters comprise at least a force similarity factor, a displacement similarity factor, a dimension similarity factor, and a stiffness similarity factor;
   S2: dividing the head-car of the train being into a deformation energy absorption zone and a non-deformation zone according to a deformation energy absorption characteristic of the train during a collision of the train;
   wherein the deformation energy absorption zone comprises an energy absorption device and a cab, and the energy absorption device comprises a buffer, a crushing tube and a main energy absorption device, wherein the buffer, the crushing tube, and the main energy absorption device are sequentially compressed and deformed;
   S3: constructing the deformation energy absorption zone and the non-deformation zone of the scaled model of the head-car based on the similarity factors of the dynamic parameters;

   a: constructing the deformation energy absorption zone comprises: obtaining a deformation energy absorption characteristic curve of the scaled model of the head-car by multiplying each of a horizontal coordinate and a vertical coordinate of a deformation energy absorption characteristic curve of the head-car of the full-scale train by the similarity factors of matching dynamic parameters, then constructing the buffer, the crushing tube, the main energy absorption device and the cab in the deformation energy absorption zone of the scaled model of the head-car based on the deformation energy absorption characteristic curve of the scaled model of the head-car and the dimension similarity factor;
   wherein the deformation energy absorption characteristic curve is a curve characterizing a relationship between the compressive displacement and impact force, and the area surrounded by the curve is an amount of the absorbed energy;
   b: constructing the non-deformation zone comprises: constructing the non-deformation zone of the scaled model of the head-car according to the dimension similarity factor and the stiffness similarity factor;
   wherein characteristic dimensions of the non-deformation zone on the scaled model of the head-car are obtained, based on an equivalent scaling in dimension, by multiplying characteristic dimensions of the non-deformation zone on the head-car of the full-scale train by the dimension similarity factor, and comprise length, width, height and thickness;

   dividing vertically each of the non-deformation zone on the head-car of the full-scale train and the non-deformation zone on the scaled model of the head-car into n units based on the equivalent scaling in dimension, and adding reinforcing ribs based on the equivalent scaling in stiffness, so that the ratio of the stiffness of each of the units on the head-car of the full-scale train to the stiffness of a respective one of the units on the scaled model of the head-car is equal to the stiffness similarity factor, wherein n is a positive integer greater than or equal to 2.

2. The method according to claim 1, **characterized in that** the similarity factors of the dynamic parameters further comprise an energy similarity factor, and constructing the deformation energy absorption zone of the scaled model of the head-car in S3 comprises:

   A: obtaining characteristic dimensions of the buffer on the scaled model of the head-car by multiplying characteristic dimensions of the buffer on the head-car of the full-scale train by the dimension similarity factor;
   B: calculating cross-sectional area of the crushing tube on the scaled model of the head-car according to an impact force corresponding to the crushing tube on the deformation energy absorption characteristic curve of the scaled model of the head-car, and calculating cross-sectional area of the main energy absorption device on the scaled model of the head-car according to an impact force corresponding to the main energy absorption device on the deformation energy absorption characteristic curve of the scaled model of the head-car;
   acquiring an amount of the absorbed energy of each of the crushing tube and the main energy absorption device on the scaled model of the head-car and calculating a compressible length of each of the crushing tube and the main energy absorption device of the scaled model of the head-car; obtaining an initial design length of each of the crushing tube and the main energy absorption device on the scaled model of the head-car by multiplying a length of each of the crushing tube and the main energy absorption device on the full-scale train by the dimension similarity factor; then obtaining a design length of the crushing tube based on the compressible length and the initial design length of the crushing tube; obtaining a design length of the main energy absorption device based on the compressible length and the initial design length of the main energy absorption device; wherein the amount of the absorbed energy of the crushing tube on the scaled model of the head-car is equal to the amount of the absorbed energy of the crushing tube on the head-car of the full-scale train multiplied by the energy similarity factor, and the amount of the absorbed energy of the main energy absorption device on the scaled model of the head-car is equal to the amount of the absorbed energy of the main energy absorption device on the head-car of the full-scale train multiplied by the energy similarity factor; the compressible length of the crushing tube on the scaled model of the head-car is equal to the amount of the absorbed energy of the crushing tube on the scaled model of the head-car divided by corresponding impact force, and the compressible length of the main energy absorption device on the scaled model of the head-car is equal to the amount of the absorbed energy of the main energy absorption device on the scaled model of the head-car divided by corresponding impact force;

C: obtaining characteristic dimensions of the cab on the scaled model of the head-car by multiplying characteristic dimensions of the cab on the head-car of the full-scale train by the dimension similarity factor; and adjusting a thickness of a front bezel and a thickness of a car body in the cab of the scaled model of the head-car according to an impact force corresponding to the cab on the deformation energy absorption characteristic curve of the scaled model of the head-car.

3. The method according to claim 2, **characterized in that** $l_d^1$ represents the initial design length of the crushing tube on the scaled model of the head-car, and $l_d^2$ represents the initial design length of the main energy absorption device on the scaled model of the head-car; $l_c^1$ represents the compressible length of the crushing tube on the scaled model of the head-car, and $l_c^2$ represents the compressible length of the main energy absorption device on the scaled model of the head-car; the design length of the crushing tube and the design length of the main energy absorption device on the scaled model of the head-car are obtained by:

determining whether the following conditions are met: $l_d^1 \geq 1.2 l_c^1$, $l_d^2 \geq 1.2 l_c^2$,

if the condition of $l_d^1 \geq 1.2 l_c^1$ is met, the length of the crushing tube on the scaled model of the head-car is equal to the initial design length $l_d^1$; if the condition of $l_d^2 \geq 1.2 l_c^2$ is met, the length of the main energy absorption device on the scaled model of the head-car is equal to the initial design length $l_d^2$;

if the condition of $l_d^1 \geq 1.2 l_c^1$ is not met, the length of the crushing tube on the scaled model of the head-car is equal to the initial design length $1.2 l_c^1$, and if the condition of $l_d^2 \geq 1.2 l_c^2$ is not met, the length of the main energy absorption device on the scaled model of the head-car is equal to the initial design length $1.2 l_c^2$.

4. The method according to claim 2, **characterized in that** the crushing tube is made of cylindrical honeycomb aluminum; the main energy absorption device is made of rectangular honeycomb aluminum; and the buffer is imitated by the rubber.

5. The method according to claim 1, **characterized in that** acquiring the similarity factors in S1 comprises: obtaining the similarity factors of the dynamic parameters of the scaled model of the head-car using a similarity theory and an equation analysis method based on a dynamic balance equation of a thin-walled plate and shell, wherein the head-car of the train is a thin-walled plate and shell structure.

6. The method according to claim 5, wherein the similarity factors of the dynamic parameters further comprise a time similarity factor, a speed similarity factor, an acceleration similarity factor, a mass similarity factor, and an energy similarity factor,
wherein relationships between the similar factors of the dynamic parameters are as follows:

$$\lambda_l = \lambda, \ \lambda_F = \lambda^2, \ \lambda_t = \lambda, \ \lambda_v = 1, \ \lambda_a = \lambda^{-1}, \ \lambda_m = \lambda^3, \ \lambda_k = \lambda, \ \lambda_E = \lambda^3$$

wherein $\lambda$ is the dimension similarity factor, $\lambda_F$, $\lambda_t$, $\lambda_v$, $\lambda_a$, $\lambda_m$, $\lambda_k$, and $\lambda_e$ are respectively the force similarity factor, the time similarity factor, the speed similarity factor, the acceleration similarity factor, the mass similarity factor, the stiffness similarity factor, and the energy similarity factor, and $\lambda_l$ is the displacement similarity factor.

7. The method according to claim 4, **characterized in that** the stiffness of the car body of each unit is analyzed by adopting finite element software in S4, wherein a loading force for the scaled model of the head-car is set to be equal to a loading force for the head-car of the full-scale train multiplied by the force similarity factor, a collision speed of the scaled model of the head-car is set to be equal to a collision speed of the head-car of the full-scale train multiplied by the speed similarity factor, and collision time of the scaled model of the head-car is set to be equal to collision time of the head-car of the full-scale train multiplied by the time similarity factor.

8. The method according to claim 1, **characterized in that** the method further comprises performing a collision simulation and a design optimisation of the scaled model of the head-car obtained in S4, which comprise:

S5: initializing the dimension similarity factor, and performing a numerical simulation of the collision of constructed scaled model of the head-car to obtain an acceleration-time curve at a center of gravity of the scaled model of the head-car, and then adopting an error between an average acceleration value at the center of gravity of the scaled model of the head-car and an average acceleration value at a center of gravity of the head-car of the full-scale train within a preset period as an error of the scaled model of the head-car and calculating the error of the scaled model of the head-car;
S6: determining whether the calculated error is greater than or equal to a preset error threshold, and if the calculated error is greater than or equal to the preset error threshold, performing S7; if the calculated error is not greater than or equal to the preset error threshold, adopting the obtained scaled model of the head-car as a target scaled model of the head-car;
S7: adopting a thickness of the reinforcing rib, a thickness of a front bezel and a thickness of a car body on the scaled model of the head-car as optimised design variables and adopting a minimum error as an optimisation target, and acquiring an optimisation range of each of the design variables, and then sampling within the optimisation range to obtain several samples of the scaled model of the head-car;
S8: calculating the error of each of the samples of the scaled model of the head-car, then acquiring an optimal sample of the scaled model of the head-car based on the optimisation target, and then determining whether an error of the optimised sample of the scaled model of the head-car is greater than or equal to the preset error threshold, and if the error of the optimised sample of the scaled model of the head-car is greater than or equal to the preset error threshold, returning to S7 to resample; if the error of the optimised sample of the scaled model of the head-car is not greater than or equal to the preset error threshold, adopting the obtained optimised sample of the scaled model of the head-car as the target scaled model of the head-car.

9. The method according to claim 8, **characterized in that** the error between the average acceleration values at the centers of gravity during a compression stage of the crushing tube and the error between the average acceleration values at the centers of gravity during a compression stage of the main energy absorption device are adopted as the errors of the scaled model of the head-car, and calculation formulas of the errors of the scaled model of the head-car are as follows:

$$w_1 = \left| \frac{a_{1m}/\lambda_a - A_{1m}}{A_{1m}} \right| \times 100\%$$

$$w_2 = \left| \frac{a_{2m}/\lambda_a - A_{2m}}{A_{2m}} \right| \times 100\%$$

wherein $w_1$ is the error of the scaled model of the head-car corresponding to the compression stage of the crushing tube and $w_2$ is the error of the scaled model of the head-car corresponding to the compression stage of the main energy absorption device; $a_{1m}$ is an average acceleration at the center of gravity of the scaled model of the head-car during the compression stage of the crushing tube and $a_{2m}$ is an average acceleration at the center of gravity of the scaled model of the head-car during the compression stage of the main energy absorption device; $A_{1m}$ is an average acceleration at the center of gravity of the head-car of the full-scale train during the compression stage of the crushing tube and $A_{2m}$ is an average acceleration at the center of gravity of the head-car of the full-scale train during the compression stage of the main energy absorption device; $\lambda_a$ is the acceleration similarity factor.

10. A scaled model of a head-car based on the method according to any of claims 1 to 9, **characterized in that** the scaled model of the head-car comprises a deformation energy absorption zone and a non-deformation zone, the deformation energy absorption zone comprises an energy absorption device and a cab, and the energy absorption device comprises a buffer, a crushing tube, and a main energy absorption device, wherein the buffer is imitated by the rubber, the crushing tube is made of cylindrical honeycomb aluminum, and the main energy absorption device is made of rectangular honeycomb aluminum.

**FIG. 1**

FIG. 2

**FIG. 3**

(a)

(b)

# FIG. 4

Reinforcing rib on top of
full-scale head car

Reinforcing rib on top of
equivalent scaled model
for train head car

**FIG. 5**

(a)

(b)

**FIG. 6**

FIG. 7

## INTERNATIONAL SEARCH REPORT

| | International application No. |
| --- | --- |
| | **PCT/CN2019/127942** |

**A. CLASSIFICATION OF SUBJECT MATTER**

G06F 17/00(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 列车, 等效, 缩, 模型, 刚度, 相似, 尺寸, 变形, 吸能, 缓冲, 碰撞, train, equivalent, contract, model, rigidity, similarity, size, deformation, energy absorption, buffer, impact

**C. DOCUMENTS CONSIDERED TO BE RELEVANT**

| Category* | Citation of document, with indication, where appropriate, of the relevant passages | Relevant to claim No. |
| --- | --- | --- |
| PX | CN 109670252 A (CENTRAL SOUTH UNIVERSITY) 23 April 2019 (2019-04-23) entire document | 1-10 |
| PX | CN 109657377 A (CENTRAL SOUTH UNIVERSITY) 19 April 2019 (2019-04-19) entire document | 1-10 |
| A | CN 107798171 A (CENTRAL SOUTH UNIVERSITY) 13 March 2018 (2018-03-13) description, paragraphs 27-81 | 1-10 |
| A | CN 103902541 A (CSR QINGDAO SIFANG CO., LTD.) 02 July 2014 (2014-07-02) description, paragraphs 36-50 | 1-10 |
| A | US 2004173555 A1 (WILT, Donald E. et al.) 09 September 2004 (2004-09-09) entire document | 1-10 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **01 March 2020** | **17 March 2020** |

| Name and mailing address of the ISA/CN | Authorized officer |
| --- | --- |
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/127942**

| Patent document cited in search report | | | Publication date (day/month/year) | Patent family member(s) | | | Publication date (day/month/year) |
|---|---|---|---|---|---|---|---|
| CN | 109670252 | A | 23 April 2019 | None | | | |
| CN | 109657377 | A | 19 April 2019 | CN | 109657377 | B | 24 December 2019 |
| CN | 107798171 | A | 13 March 2018 | None | | | |
| CN | 103902541 | A | 02 July 2014 | CN | 103902541 | B | 05 September 2017 |
| US | 2004173555 | A1 | 09 September 2004 | WO | 2004078553 | A1 | 16 September 2004 |
| | | | | CA | 2516585 | C | 15 May 2012 |
| | | | | US | 6796448 | B1 | 28 September 2004 |
| | | | | MX | 252808 | B | 18 December 2007 |
| | | | | MX | 2005009373 | A1 | 01 November 2005 |

Form PCT/ISA/210 (patent family annex) (January 2015)